# EUROPEAN PATENT APPLICATION

(11) **EP 4 790 268 A1**
(43) Date of publication of application: **12.08.2026**
(21) Application number: 26154174.2
(22) Date of filing: 26.01.2026
(51) Int. Cl.: F16C 17/03, F16C 19/52, F16C 33/10, F16C 37/00

(54) **EDM ADJUSTABLE EVACUATED FLEX PIVOT BEARING**

(30) Priority: 05.02.2025 US 202563754224 P; 13.01.2026 US 202619447519
(71) Applicant: Ingersoll-Rand Industrial U.S., Inc., Davidson, NC 28036 (US)
(72) Inventor: Tierney, William, Depew, NY (US); Lynah, Patrick, Amherst, NY (US); Lai, Thao, Arlington, TX (US)
(74) Representative: Murgitroyd & Company

(57) **Abstract**

An Electrical Discharge Machined (EDM) bearing (120) is provided, the EDM bearing comprising a housing (122) extending around a rotational axis (100X), the housing defining at least one lubricant port (130) extending radially from an outer circumference of the housing towards the rotational axis. An EDM flexing pivot pad (128) is machined from the housing (122), the EDM flexing pivot pad configured to provide support to a rotating shaft (110) rotating around the rotational axis (100X) in a first direction. A lubricant nozzle (134) is disposed proximate to the EDM flexing pivot pad (128), and is configured to deliver a flow of lubricant from the lubricant port directly to the rotating shaft (110).

## Description

### BACKGROUND

Bearings reduce friction between moving parts and constrain relative motion to desired directions. Mechanical systems such as rotary machines (e.g., motors, generators, compressors, etc.) use rotary bearings to allow shafts or axles to rotate freely around a fixed axis. Rotary bearings transfer axial and radial loads from the source of the load to the structure supporting it.

Rotary machines such as compressor systems use rotary bearings to reduce friction and distribute loads of rotating shafts. For example, rotary bearings used in drive systems of centrifugal compressors or rotary screw compressors may be disposed to support a pinion shaft of the drive system.

A tilting pad journal bearing (TBJB) is a fluid-film bearing that uses a coating of lubricant between the bearing and the rotating component (e.g., a rotating shaft). TBJBs may include curved segments or pads that are connected to pivoting points of a bearing housing. TBJBs include lubrication ports disposed between each pad pair. Typically, the pads are assembled to the bearing housing, resulting in a stack-up of tolerances when the pads are assembled to one another. Consequently, since they comprise separate components, these bearings do not allow for the use of tighter tolerances in their manufacture and thus require more maintenance to prevent and correct mechanical failure.

The lubricant in TBJBs is delivered between the pad pairs and the rotating shaft in a mixing cavity, where hot lubricant in contact with the pads and the shaft, and cool lubricant delivered by a lubricant port are mixed to cool the hot lubricant. This mixing of the lubricant is not an effective way of directing heat away from the rotating system. Additionally, in instances where the bearings have identical nozzle depths and orifice sizes, some pads may receive more lubrication or less lubrication than necessary to remove the heat produced by friction. For example, pads that receive loads imparted by gear forces acting on the shaft and pads that receive the weight of the rotating shaft (loaded pads) produce more friction and heat than the other pads of the TBJB. These pads may generally not be cooled as much as is desirable for optimum performance and life of the bearing pads. On the other hand, unloaded pads, which comprise pads that surround the rotating shaft, but do not carry the weight load of the rotating shaft, may receive additional lubrication that does not transfer heat away from the contact surfaces before the lubrication is expelled and recirculated. Loaded pads tend to be hotter than unloaded pads because the fluid film that forms between the pads and the shaft is thinner, the pads tend to receive less lubricant than unloaded pads. Unloaded pads consume more lubricant than loaded pads, even though the lubricant does not effectively remove heat between the pads and the shaft.

This disclosure is directed to a bearing having Electrical Discharge Machined (EDM) flexing pivot pads and a removable nozzle configured to directly deliver cool lubricant to the bearing and rotating shaft. In embodiments, the EDM bearing comprises a bearing housing that includes a casing section and a pad section machined from a common housing element. The bearing further includes a lubricant nozzle disposed between pairs of pads in the pad section. The lubricant nozzle delivers a cool lubricant proximate to the rotating shaft, allowing fresh cool lubricant to remove heat from the system (e.g., the rotating shaft, pivot pads, etc.) faster, resulting in a reduction of the operating temperature of the rotating shaft. Additionally, the outlet of the lubricant nozzle is positioned between two flexing pivot pads to provide a lubricant barrier that prevents hot lubricant transfer from adjacent pads in contact with the rotating shaft, thereby transferring heat away from the pads. In embodiments, the EDM bearing includes a plurality of lubricant nozzles disposed around the shaft. In embodiments, the lubricant nozzles are interchangeable with lubricant nozzles having diameters and/or lengths that are larger or smaller depending on desired parameters (e.g., oil flow minimization, pad temperature control, horsepower consumption, etc.)

The pad section includes the flex pivot pads machined from a common housing element of the bearing. The EDM machined flex pivot pads allow the bearing to have tighter tolerances and reduce the likelihood of mechanical failure of the bearing by eliminating the use of multiple parts such as tilting pads. The EDM bearing of the present disclosure allows for more exact bearing clearance and a more consistent performance.

### SUMMARY

According to a first aspect of the present invention there is provided an Electrical Discharge Machined (EDM) bearing comprising:
a housing extending around a rotational axis, the housing defining at least one lubricant port extending radially from an outer circumference of the housing towards the rotational axis;
an EDM flexing pivot pad machined from the housing, the EDM flexing pivot pad configured to provide support to a rotating shaft rotating around the rotational axis in a first direction; and
a lubricant nozzle disposed proximate to the EDM flexing pivot pad, the lubricant nozzle configured to deliver a flow of lubricant from the lubricant port directly to the rotating shaft.

Preferably, the lubricant nozzle is machined from the housing and extends radially towards the rotating shaft.

The EDM bearing may further include a first lubricant nozzle disposed adjacent to a loaded EDM flexing pivot pad and a second lubricant nozzle disposed adjacent to an unloaded EDM flexing pivot pad, wherein the first lubricant nozzle has an orifice diameter greater than an orifice diameter of the second lubricant nozzle.

Preferably, the first lubricant nozzle has a length greater than the length of the second lubricant nozzle.

Preferably, the first lubricant nozzle is disposed at a leading side of the loaded EDM flexing pivot pad and the second lubricant nozzle is disposed at a leading side of the unloaded EDM flexing pivot pad.

The EDM bearing may further include a first lubricant nozzle disposed adjacent to a loaded EDM flexing pivot pad and a second lubricant nozzle disposed adjacent to an unloaded EDM flexing pivot pad, wherein the first lubricant nozzle includes at least one spacer coupled to the housing, the at least one spacer configured to elongate the first lubricant nozzle in comparison to the length of the second lubricant nozzle.

The EDM bearing may further include more than one lubricant nozzles disposed adjacent to a loaded EDM flexing pivot pad and at least one lubricant nozzle disposed adjacent to an unloaded EDM flexing pivot pad.

The EDM bearing may further include a seal plate configured to retain the lubricant flowing through the EDM flexing pivot pads, wherein the internal radius of the seal plate with reference to the rotational axis is greater than the internal radius of the EDM flexing pivot pad with reference to the rotational axis.

According to a second aspect of the present invention there is provided a compressor system comprising:
a compressor airend configured to be rotated around a rotational axis; and
a drive system configured to drive the compressor airend, the drive system including:
   a rotating shaft coupled to the compressor airend, and
   an Electrical Discharge Machined (EDM) bearing according to the first aspect, the EDM bearing configured to support the rotating shaft.

### DRAWINGS

The Detailed Description is described with reference to the accompanying figures. The use of the same reference numbers in different instances in the description and the figures may indicate similar or identical items.
FIG. 1 is an isometric view of a drive system in a compressor assembly including an electrical discharge machined (EDM) bearing having an adjustable evacuated flex pivot in accordance with example embodiments of the present disclosure.
FIG. 2 is a cross-sectional isometric view of the EDM bearing of FIG. 1 along line 2-2 in accordance with example embodiments of the present disclosure.
FIG. 3 is a cross-sectional front view of the EDM bearing of FIG. 1 along line 3-3 in accordance with other example embodiments of the present disclosure.
FIG. 4 is a partial cross-sectional view of the EDM bearing of FIG. 1 along line 4-4 in accordance with example embodiments of the present disclosure.

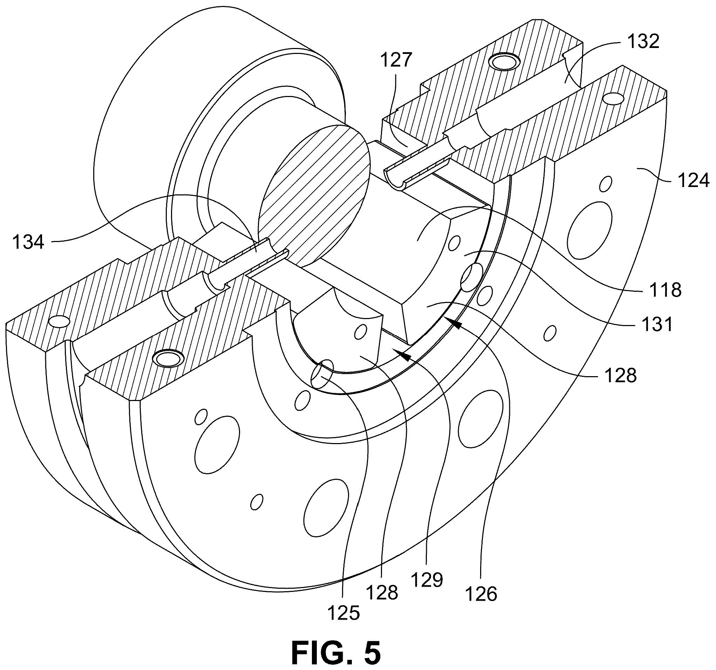

FIG. 5 is a cross-sectional isometric view of the EDM bearing of FIG. 2 along line 5-5 in accordance with example embodiments of the present disclosure.
FIG. 6 is a cross-sectional view of an EDM bearing having Integral Squeeze Film Dampers (ISFD^{®}) in accordance with example embodiments of the present disclosure.
FIG. 7 is a diagram of a compression system employing an electrical discharge machined (EDM) bearing having am adjustable evacuated flex pivot in accordance with example embodiments of the present disclosure.

### DETAILED DESCRIPTION

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

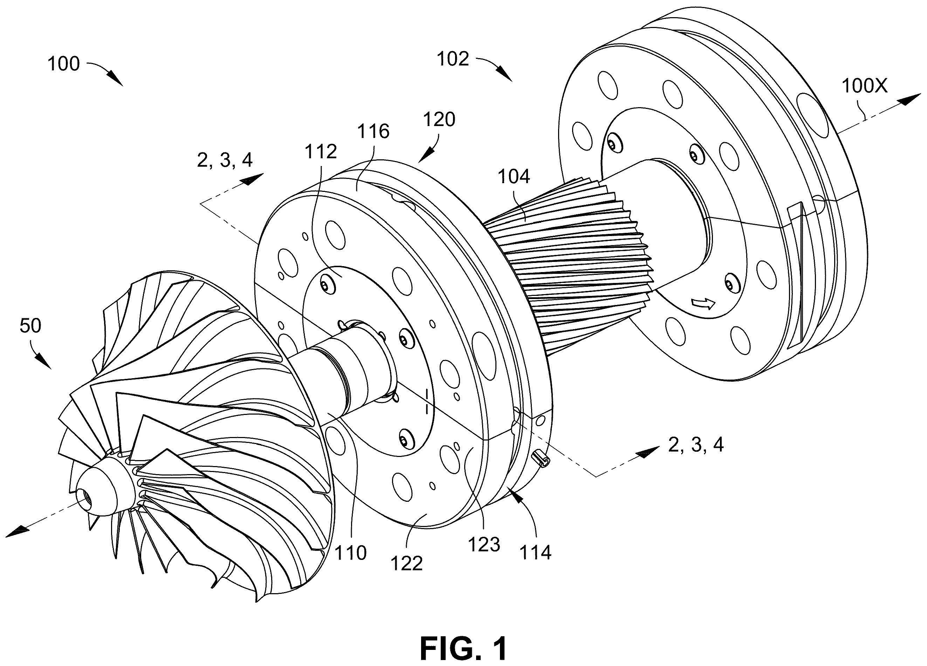

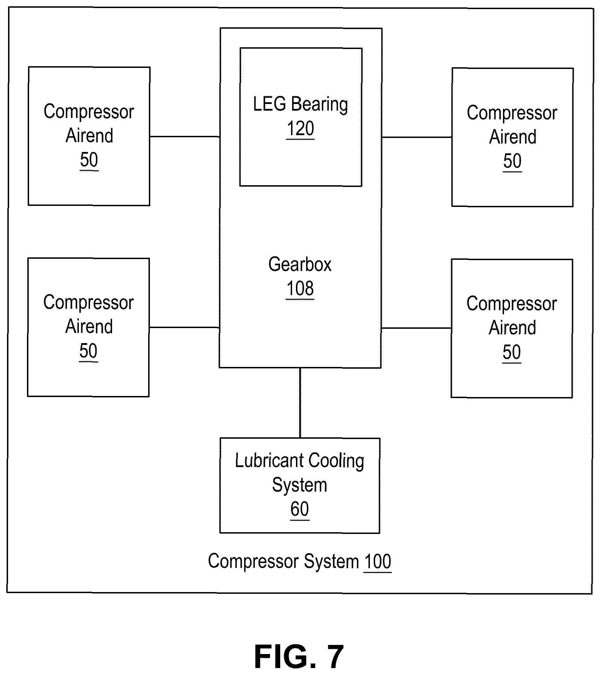

Referring to FIGS. 1 and 7, a compressor system 100 having at least one compressor airend 50 and a drive system 102 is shown. The drive system 102 includes a gearbox 108 configured to drive a rotating shaft 110 around a rotating axis 100X. In embodiments, the gearbox 108 includes at least one pinion 104 and an electrical discharge machined (EDM) bearing 120. The gearbox 108 may include a gearbox housing and a bull gear, where the bull gear is configured to drive the at least one pinion 104.

The EDM bearing 120 is configured to support rotation of the shaft 110 while minimizing friction between the shaft 110 and the bearing 120. It should be understood that, although in the example embodiment discussed, the EDM bearing 120 is described as a part of a drive system 102 in a compressor system 100, the EDM bearing 120 can be employed in other applications where a rotating shaft is used, for example, in a rotary machine such as a motor, a generator, a pump, or the like In the example embodiments shown, the bearing is a journal bearing.

The EDM bearing 120 includes a bearing housing 122 and a seal plate 112 disposed at a distal end 123 of the bearing housing 122. The bearing housing 122 includes an outer surface 116, an inner surface 118, a casing section 124 and a pad section 126. The inner surface 118 of the bearing housing 122 is proximate/adjacent to the rotating shaft 110. As shown in FIG. 1, the bearing housing 122 includes a lubrication ring 114 defined on the circumference of the outer surface 116. The lubrication ring 114 is fluidly connected to gearbox ports (not shown) of a lubricant cooling system 60 supplying lubrication to the gearbox 108 and is configured to supply lubricant to the EDM bearing 120.

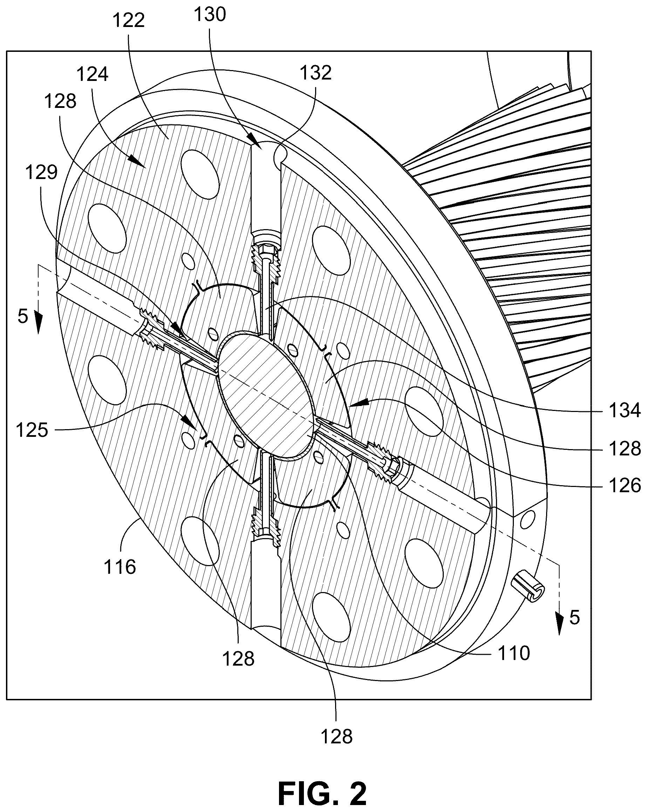

As shown in FIG. 2, the pad section 126 includes at least one flexing pivot pad 128 machined through electrical discharge machining (EDM) with the casing section 124 as a unitary piece, making the flexing pivot pad 128 integral with the casing section 124 of the bearing housing 122. A flex pivot stem 125 machined between the casing section 124 and the pad section 126 connects the two bearing sections (the casing section 124 and the pad section 126) together. The flex pivot stem 125 allows the flexing pivot pad to dynamically support the rotating shaft 110 based on the applied loads on the shaft during operation. In the embodiment shown, the pad section 126 includes four (4) flexing pivot pads 128, each having a cavity 129 formed between respective pairs of flexing pivot pads 128. In other embodiments (not shown), the pad section 126 may include one or more flexing pivot pads 128 that substantially surrounds and supports the surface of the rotating shaft 110. For example, the pad portion 126 may include two (2) flexing pivot pads 128, three (3) flexing pivot pads 128, five (5) flexing pivot pads 128, and so on.

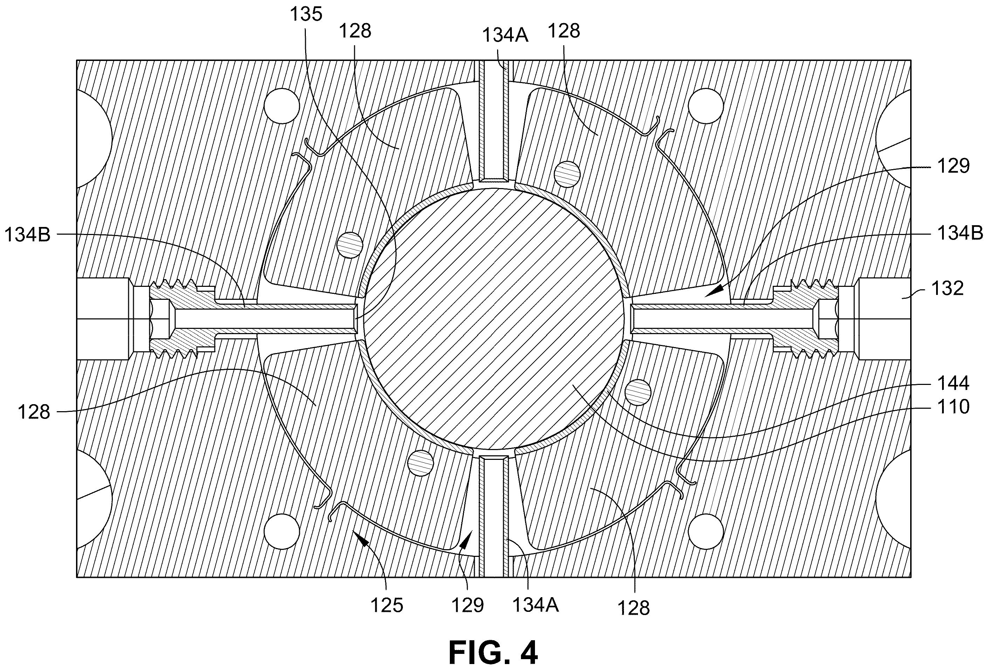

Referring to FIGS. 2 through 4, lubricant flooding the lubrication ring 114 is directed to the shaft 110 through a lubrication port 130. The lubrication port 130 includes a casing channel 132 disposed in the casing section 124 and a lubrication nozzle 134 connected to the casing channel 132 and extending from the casing section 124 and through the pad section 126. Each lubrication nozzle 134 extends between respective pairs of flexing pivot pads 128 and is configured to deliver cool lubricant directly to the rotating shaft 110. In the embodiment shown, the lubrication nozzles 134 are removably connected to the casing channel 132 through a threaded connection. In other embodiments, the lubrication nozzles 134 may have a different coupling configuration to the casing channel 132, including but not limited to an interference fit. In other embodiments, the lubrication nozzles 134 are machined directly into the housing, extending from the casing channel 132. The lubrication nozzles 134 are machined via EDM or another machining process that allow the lubrication nozzles to be an integral section of the lubrication port 130.

When flooded, the lubrication nozzles 134 lubricate the rotating shaft 110 directly, before the cooler lubricant entering from the gearbox 108 is mixed with hot lubricant that has been in contact with the pads 128. The fresh lubricant provides a barrier to prevent hot lubricant transfer between adjacent flexing pivot pads 128. This direct supply of fresh cool lubricant at least partially, and in some embodiments, fully, inhibits heat retention between the rotating shaft 110 and the inner surface 118 of the bearing 120.

In example embodiments, the lubrication nozzles 134 are not identical to one other. For example, a first group of opposing lubrication nozzles 134A may have a first length and/or first depth and/or a first orifice diameter. Similarly, a second group of opposing lubrication nozzles 134B may have a second length and/or a second depth and/or a second orifice diameter. Moreover, groupings of lubrication nozzles 134 may be provided that have different dimensions from one another and/or other groupings of nozzles 134. In some embodiments, a lubrication nozzle may be grouped with the nozzle adjacent to a common flexing pivot pad 128. In other embodiments, a first pair of lubrication nozzles 134A corresponds to the lubrication nozzles adjacent to loaded flexing pivot pads 128 and a second pair of lubrication nozzles 134B corresponds to the lubrication nozzles adjacent to unloaded flexing pivot pads 128. In other embodiments, a third grouping of lubrication nozzle (not shown) corresponds to a lubrication nozzle adjacent to both loaded and unloaded flexing pivot pads 128. In yet other embodiments, a first grouping of lubrication nozzles 134 corresponds to the lubrication nozzles 134 disposed on a leading side of a loaded flexing pivot pad 128, while a second grouping of lubrication nozzles 134 corresponds to the lubrication nozzles 134 disposed on a leading side of an unloaded flexing pivot pad 128.

In the embodiments shown, the EDM bearing 120 includes four (4) lubrication nozzles 134, one between each respective pair of flexing pivot pads 128. In other embodiments (not shown), the bearing 120 may include more than one lubrication nozzle 134 between pairs of flexing pivot pads 128. Specifically, in some embodiments, as loaded flexing pivot pads 128 consume lubricant faster than unloaded flexing pivot pads 128, two or more lubrication nozzles 134 may be disposed adjacent to the loaded flexing pivot pads 128 while only one lubrication nozzle 134 is disposed adjacent to unloaded flexing pivot pads 128.

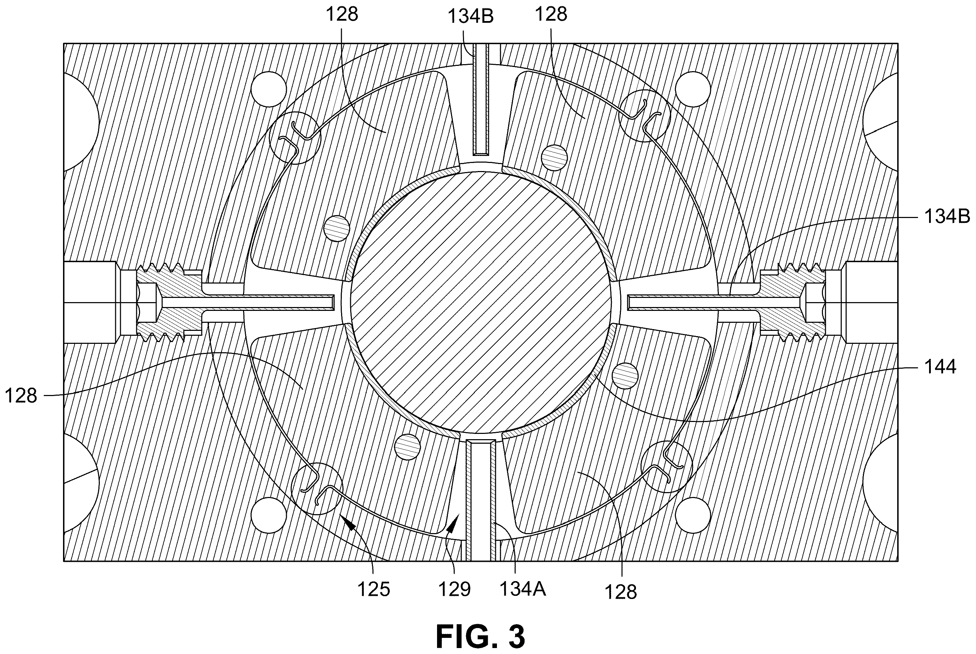

Similarly, in embodiments, one or more lubrication nozzles 134 positioned adjacent to loaded flexing pivot pads 128 may have a longer depth or a shorter depth than the lubrication nozzles 134 positioned adjacent to unloaded flexing pivot pads 128. For example, as shown in FIG. 3 a lubrication nozzle 134A disposed between a pair of loaded flexing pivot pads 128 may have a longer and/or larger nozzle, and/or may be positioned closer to the rotating shaft 110 compared to lubrication nozzles 134B positioned adjacent to unloaded flexing pivot pads 128. In this manner, the lubrication nozzles 134 reduce lubricant from being unnecessarily fed to the unloaded flexing pivot pads 128 while delivering more lubricant to the loaded flexing pivot pads 128.

In embodiments, the depth of the lubrication nozzles 134 may be adjusted by including spacers (not shown) between an end of the lubrication nozzle 134 and the inner surface 127 of the casing section 124 defining the casing channel 132. In other embodiments, the individual lubrication nozzles 134 are machined having different dimensions e.g., length, depth, orifice diameter, etc. By providing flexibility in the individual dimensions of the lubrication nozzles 134 with relation to their corresponding flexing pivot pads 128, the lubricant flow proceeding each flexing pivot pad 128 can be configured to provide maximum load capacity and minimum lubricant flow and/or horsepower consumption.

As shown, the inner surface 118 of the EDM bearing 120 includes a sleeve 144 configured to reduce friction between the EDM bearing 120 and the rotating shaft 110. In such embodiments, the sleeve 144 may be formed from a material different from the bearing housing 122. For example, in one embodiment, the bearing housing 122 and flexing pivot pads 128 are composed of a steel such as chrome steel, stainless steel, carbon steel; a ceramic such as a silicon nitride; a polymer, etc., or a combination thereof, while the sleeve 144 is composed of a tin-based babbitt. In other embodiments, the babbitt metal may be another alloy including at least one of tin, copper, antimony, etc., or a combination thereof. In embodiments, the inner surface of the sleeve 144 has the same radius from the axis 110X as the distance from the axis 110X to the orifice opening 135 of the lubrication nozzles 134. In other embodiments, the distance from the axis 110X to the orifice opening 135 is equal to the inner surface 118 of the flexing pivot pads 128. In other embodiments, the EDM bearing 120 does not include a sleeve 144.

Referring again to FIG. 1, seal plates 112 are disposed at the ends 131 of the flexing pivot pads 128 and are configured to hold both sides of the pads 128 between each other. The seal plates 112 are configured to keep the lubricant flowing in the flexing pivot pads 128 and allow for controlled evacuation of the lubricant on the flexing pivot pads 128. In embodiments, an inner radius of the flexing pivot pads 128 (with relation to the rotational axis 110X) is smaller than an inner radius of the seal plates 112 (with relation to the rotational axis 110X) to allow the lubricant to flow freely between the flexing pivot pad 128 and the rotation shaft 110 where it is evacuated to the gearbox 108 and delivered to the lubricant cooling system 60 (FIG. 7) to be cooled before being recirculated into the drive system 102 or another location of the compressor system 100.

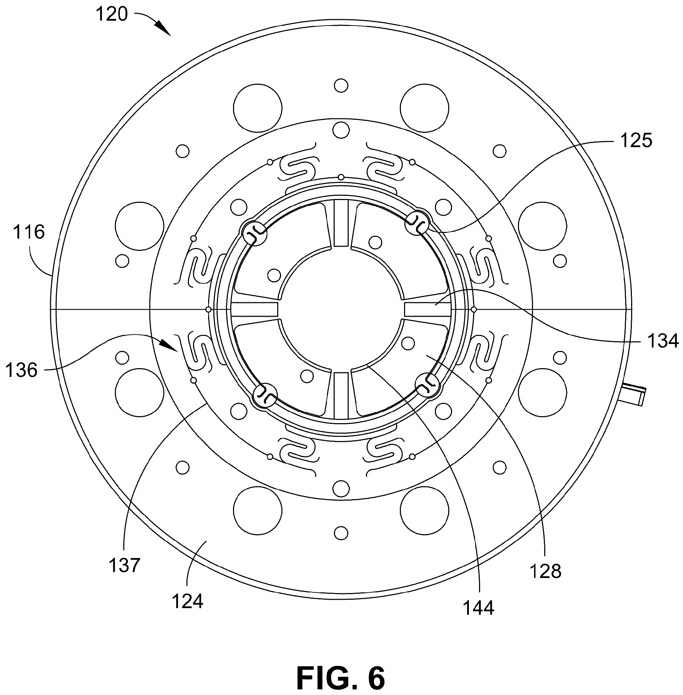

In embodiments, such as shown in FIG. 6, the casing section 124 further includes a squeeze film damper 136 configured to increase the stability of the EDM bearing 120. The squeeze film damper 136 isolates the rotating shaft 110 from vibrations and adds damping and stiffness by using a thin layer of pressurized lubricant in an annular gap 137 disposed between the outer surface 116 and the flexing pivot pads 128. For example, an Integral Squeeze Film Damper (ISFD^{®}) may be machined using EDM to apply the benefits discussed above. The use of the term ISFD^{®}, which is a trade name or a mark used in commerce, has been noted in this application. It should be noted that other squeeze film dampers may be used with the EDM bearing 120.

In the embodiment shown in FIG. 7, the compressor system 100 includes four (4) compressor airends 50. However, it should be understood that in other embodiments, the compressor system 100 may include fewer compressor airends 50 or more compressor airends 50. It should also be understood that the EDM bearing 120 may be used in other applications and is not limited to be used in a compressor system 100.

While the subject matter has been illustrated and described in detail in the drawings and foregoing description, the same is to be considered as illustrative and not restrictive in character, it being understood that only some embodiments have been shown and described and that all changes and modifications that come within the spirit of the subject matter are desired to be protected. In reading the claims, it is intended that when words such as "a," "an," "at least one," or "at least one portion" are used there is no intention to limit the claim to only one item unless specifically stated to the contrary in the claim. Unless specified or limited otherwise, the terms "connected," and "coupled" and variations thereof are used broadly and encompass both direct and indirect mountings, connections, supports, and couplings. Further, "connected" and "coupled" are not restricted to physical or mechanical connections or couplings.

## Claims

1. An Electrical Discharge Machined (EDM) bearing comprising:
a housing extending around a rotational axis, the housing defining at least one lubricant port extending radially from an outer circumference of the housing towards the rotational axis;
an EDM flexing pivot pad machined from the housing, the EDM flexing pivot pad configured to provide support to a rotating shaft rotating around the rotational axis in a first direction; and
a lubricant nozzle disposed proximate to the EDM flexing pivot pad, the lubricant nozzle configured to deliver a flow of lubricant from the lubricant port directly to the rotating shaft.

2. The EDM bearing as recited in claim 1, wherein the lubricant nozzle is machined from the housing and extends radially towards the rotating shaft.

3. The EDM bearing as recited in claim 1, further including a first lubricant nozzle disposed adjacent to a loaded EDM flexing pivot pad and a second lubricant nozzle disposed adjacent to an unloaded EDM flexing pivot pad, wherein the first lubricant nozzle has an orifice diameter greater than an orifice diameter of the second lubricant nozzle.

4. The EDM bearing as recited in claim 3, wherein the first lubricant nozzle has a length greater than the length of the second lubricant nozzle.

5. The EDM bearing as recited in claim 4, wherein the first lubricant nozzle is disposed at a leading side of the loaded EDM flexing pivot pad and the second lubricant nozzle is disposed at a leading side of the unloaded EDM flexing pivot pad.

6. The EDM bearing as recited in claim 1, further including a first lubricant nozzle disposed adjacent to a loaded EDM flexing pivot pad and a second lubricant nozzle disposed adjacent to an unloaded EDM flexing pivot pad, wherein the first lubricant nozzle includes at least one spacer coupled to the housing, the at least one spacer configured to elongate the first lubricant nozzle in comparison to the length of the second lubricant nozzle.

7. The EDM bearing as recited in claim 1 further including more than one lubricant nozzles disposed adjacent to a loaded EDM flexing pivot pad and at least one lubricant nozzle disposed adjacent to an unloaded EDM flexing pivot pad.

8. The EDM bearing as recited in claim 1, further including a seal plate configured to retain the lubricant flowing through the EDM flexing pivot pads, wherein the internal radius of the seal plate with reference to the rotational axis is greater than the internal radius of the EDM flexing pivot pad with reference to the rotational axis.

9. A compressor system comprising:
a compressor airend configured to be rotated around a rotational axis; and
a drive system configured to drive the compressor airend, the drive system including:
a rotating shaft coupled to the compressor airend, and
an Electrical Discharge Machined (EDM) bearing according to any preceding claim, the EDM bearing configured to support the rotating shaft.
